# FASCICULE DE BREVET EUROPEEN

(11) **EP 0 776 746 B1**
(45) Date de publication et mention de la délivrance du brevet: **07.11.2001**
(21) Numéro de dépôt: 95203277.9
(22) Date de dépôt: 29.11.1995
(51) Int. Cl.: B29B 9/06, A23P 1/02

(54) **Dispositif de découpe**
Schneidvorrichtung
Cutting device

(43) Date de publication de la demande: 04.06.1997
(73) Titulaire: SOCIETE DES PRODUITS NESTLE S.A., 1800 Vevey (CH)
(72) Inventeur: Janot, Denis, F-80800 Fouilloy (FR); Sisiak, Laurent, F-80090 Amiens (FR)
(74) Mandataire: Thomas, Alain

(56) Documents cités:
- WO-A-93/03912
- DE-A- 3 940 722
- FR-A- 2 515 934
- US-A- 3 892 834

## Description

L'invention concerne un dispositif de découpe à la sortie de filières d'un système de cuisson-extrusion, comprenant un arbre rotatif portant plusieurs arêtes de coupe.

Il est déjà connu de disposer à la sortie d'un dispositif de cuisson-extrusion un dispositif de découpe, notamment en alimentation animale, pour obtenir des aliments secs ayant la forme donnée par la filière d'extrusion. Le brevet Japonais 61 280 260 au nom de KK Ooyama Foods Machinery concerne un dispositif pour fabriquer des aliments pour animaux familiers et comportant à la sortie de la filière d'extrusion deux couteaux rotatifs porté par un arbre, dont l'axe est parallèle à l'axe de l'extrudeuse, l'un des couteaux permettant de faire une entaille sur le produit et le second permettant la découpe totale dudit produit. L'inconvénient de ce dispositif est que l'axe du couteau est décalé par rapport à l'axe de l'extrudeuse, ce qui implique que les lames du couteau tournent dans le vide sur une grande partie de leur circonférence de rotation, ce qui peut poser des problèmes de sécurité (carrénage) et d'ajustement des lames car la force centrifuge est grande. D'autre part, ce dispositif de découpe n'est utilisable qu'avec une seule filière de sortie de produit.

Le but de la présente invention est de trouver un dispositif de découpe ne posant aucun problème de sécurité, ne présentant aucun risque de dérèglement et permettant une utilisation depuis une extrudeuse pouvant comporter plusieurs filières de sortie.

L'invention concerne un dispositif de découpe à la sortie de filières d'un système de cuisson-extrusion selon la revendication 1.

Le dispositif selon l'invention permet de fabriquer des croquettes pour l'alimentation animale ou des céréales pour le petit déjeuner comportant des effets de surface discrets ( ouïes). Le dispositif est utilisable pour la fabrication de tous les produits extrudés sur monovis ou bivis ou toute machine permettant de pousser la pâte à travers une ou plusieurs filières : on place le dispositif selon l'invention directement à la sortie desdites filières et on règle la rotation des moyens de coupe à la vitesse adéquate permettant d'obtenir le produit souhaité, c'est-à-dire l'épaisseur de croquette ou de céréale désirée. La pâte de départ peut être colorée ou non.

On opère de la manière suivante : on effectue dans le premier compartiment de l'extrudeuse le mélange de tous les ingrédients, à savoir farine, eau , sucre , arômes et colorants et la pâte ainsi formée est chauffée progressivement pour être cuite et est poussée à travers un nombre variable de filières ayant la forme de croquette ou de céréale désirée, telle que chat, souris, poisson, carotte, autres formes animales ou végétales ainsi que les formes géométriques. En sortie de filière, le boudin est coupé avec le dispositif selon l'invention, qui comporte plusieurs arêtes de coupe dont la disposition permet d'obtenir les différents effets de surface. finalement avec des arêtes de coupe non linéaires, on parle de coupe striée.

Par arêtes de coupe non continues, on entend dans la présente description, qu'on dispose d'arêtes de coupe comportant au moins un couteau ayant deux lames décalées, lesdites lames ayant sensiblement la même longueur et étant disposées à des distances différentes de l'axe de rotation de l'arbre.

Le principe général repose sur le fait que le couteau coupe ainsi le boudin d'extrusion en sortie de filière en deux temps. La première partie du couteau coupe une partie de la croquette alors que le boudin continue à sortir avant que la deuxième partie du couteau ne le coupe. On provoque ainsi l'apparition d'un effet de surface discret (ouïes du poisson, oreilles de souris). La deuxième partie du couteau détache en totalité la croquette ainsi coupée.

Comme précédemment, l'effet de surface est lié à l'expansion naturelle du produit en sortie de filière mais aussi à un angle de coupe approprié. En effet, l'angle de la lame située la plus proche de l'axe de rotation de l'arbre (angle de dépouille) provoquera l'écartement de la première partie entaillée ( ouïe, oreille).

Cette technique de coupe est utilisée pour deux produits différents, à savoir les croquettes de souris avec oreille et les croquettes de poisson avec ouïe. On peut également utiliser le dispositif selon l'invention pour les céréales pour petit déjeuner ou les produits de confiserie.

Dans une forme de réalisation particulière, on utilise des arêtes de coupe non continues comportant deux couteaux avec lames décalées, lesdits couteaux étant disposée symétriquement par rapport à l'axe de rotation de l'arbre.

Le grand intérêt du dispositif selon l'invention est que les arêtes de coupe sont montés sur un arbre rotatif et sont en une seule pièce ( monobloc à une ou plusieurs couteaux) alors que pour le brevet japonais précité le système de coupe comporte deux pièces.

La suite de la description est faite en référence aux dessins sur lesquels :
Fig.1 représente schématiquement l'extrudeur avec le système de coupe,
Fig. 2 représente schématiquement le dispositif selon l'invention pour la coupe décalée,
Fig. 3 représente le produit obtenu avec le dispositif de la Fig. 4.

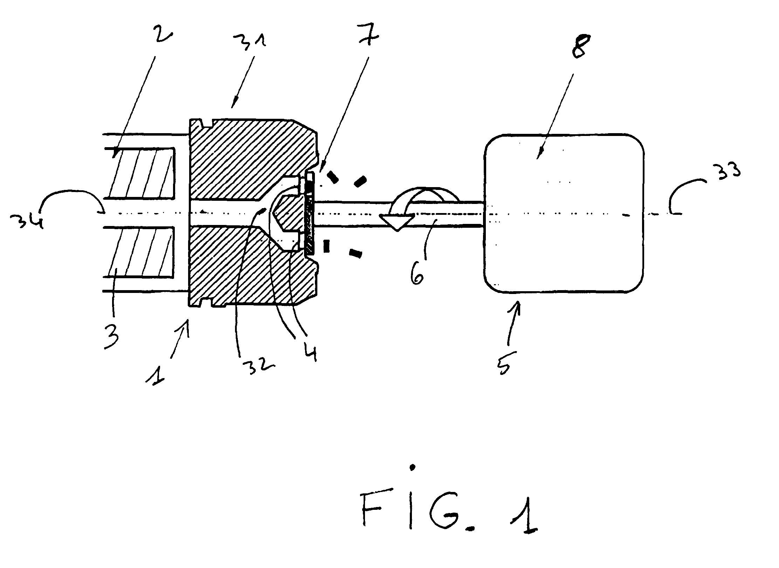

Selon la Figure 1, le dispositif de cuisson-extrusion (1) du type bivis (2,3) amène la pâte sur la tête d'extrusion (31) par les conduits (32) aboutissant sur les filières d'extrusion (4). La pâte est obtenue par un mélange en amont de tous les ingrédients nécessaires, à savoir farine, eau, sucre, arômes et colorants. L'extrudeur a un profil de température permettant d'arriver à 130 °C pour une durée de passage de l'ordre de 30 secondes. A la sortie des filières, on place le dispositif selon l'invention (5) comprenant un arbre (6) portant les moyens de coupe (7), ledit arbre étant entraîné en rotation dans le sens de la flèche à l'aide du moteur (8). La vitesse de rotation de l'arbre est adaptée au débit de sortie du boudin d'extrusion, compte tenu de l'épaisseur qu'on veut donner au produit final. Pour un débit de l'ordre de 300 kg/h on fait tourner l'arbre à une vitesse d'environ 2000 tours/min. L'axe (33) de rotation de l'arbre est confondu avec l'axe (34) de rotation du système de cuisson-extrusion.

La figure 2 représente schématiquement le dispositif de coupe décalée disposé à la sortie de l'extrudeur (1). Dans ce cas aussi on a représenté une seule filière (17) ayant la forme de poisson, mais on peut en avoir plusieurs. L'arbre (6) porte les moyens de coupe (18) qui sont formés d'une seule pièce et comportent deux couteaux, chacun de ces couteaux étant constitué par deux lames décalées, respectivement (19,20) et (21,22).On opère de la manière suivante : Le boudin d'extrusion sort de la filière (17) et les couteaux entraînés par le moteur (8) tournent dans le sens des aiguilles d'une montre. La lame (20) entaille le corps du poisson jusqu'à ouïe et la lame (19) termine la découpe de la tête : du fait de l'expansion du produit, c'est le coin de la lame (20) qui permet la formation de ouïe. Les couteaux continuent à tourner et les lames (21) et (22) redécoupent un nouveau poisson et ainsi de suite.

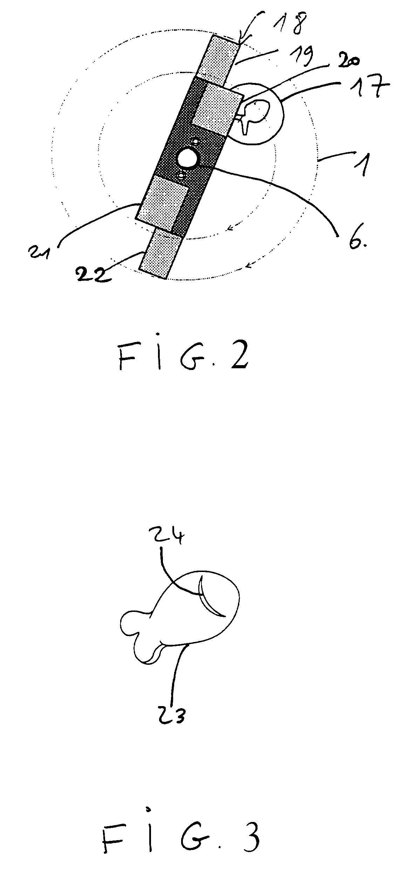

La figure 3 montre bien le poisson (23) avec son ouïe (24).

On peut avec le dispositif selon l'invention travailler dans le domaine de l'alimentation animale (aliments secs), mais on peut aussi envisager des applications dans les céréales pour petit déjeuner et produits de confiserie.

## Revendications

1. Dispositif de découpe à la sortie de filières d'un système de cuisson-extrusion, comprenant un arbre rotatif (6) portant plusieurs arêtes de coupe non continues, (7), (18) **caractérisé en ce que** l'axe de rotation de l'arbre est confondu avec celui du système de cuisson-extrusion (1) et les arêtes de coupe comportent au moins un couteau ayant deux lames décalées (19, 20, 21, 22), ayant sensiblement la même longueur et disposées à des distances différentes de l'axe de rotation de l'arbre.

2. Dispositif selon la revendication 1, **caractérisé en ce que** les arêtes de coupe sont non continues et comportent deux couteaux avec lames décalées, lesdits couteaux étant disposés symétriquement par rapport à l'axe de rotation de l'arbre.

## Claims

1. Cutting device at the outlet from the dies of an extrusion-cooking system, comprising a rotating shaft (6) carrying several discontinuous cutting edges (7), (18),
**characterized in that** the axis of rotation of the shaft is coincident with that of the extrusion-cooking system (1) and the cutting edges comprise at least one knife having two offset blades (19, 20, 21, 22), having the same length and being arranged at different distances from the axis of rotation of the shaft.

2. Device according to claim 1,
**characterized in that** the cutting edges are discontinuous and comprise two knives with offset blades, the said knives being arranged symmetrically with respect to the axis of rotation of the shaft.

## Patentansprüche

1. Schneidvorrichtung am Austritt von Düsen eines Kochextrusionssystems, bestehend aus einer rotierenden Welle (6), die mehrere nicht kontinuierliche Schneidkanten (7), (18) trägt, **dadurch gekennzeichnet, dass** die Rotationsachse der Welle mit der des Kochextrusionssystems (1) zusammenfällt und die Schneidkanten mindestens ein Messer umfassen, das zwei versetzte Klingen (19, 20, 21, 22) von im wesentlichen gleicher Länge besitzt, die in verschiedenen Abständen von der Rotationsachse der Welle angeordnet sind.

2. Vorrichtung nach Anspruch 1, **dadurch gekennzeichnet, dass** die Schneidkanten nicht kontinuierlich sind und zwei Messer mit versetzten Klingen umfassen, wobei die Messer bezüglich der Rotationsachse der Welle symmetrisch angeordnet sind.
